# EUROPEAN PATENT APPLICATION

(11) **EP 4 386 499 A1**
(43) Date of publication of application: **19.06.2024**
(21) Application number: 23216190.1
(22) Date of filing: 13.12.2023
(51) Int. Cl.: G05B 23/02, G07C 5/08

(54) **SYSTEM AND METHOD FOR ANALYSING THE HEALTH STATE OF A VEHICLE**

(30) Priority: 15.12.2022 IT 202200025704
(71) Applicant: IVECO S.P.A., 10156 Torino (IT)
(72) Inventor: PIRILLO, Luigi, 10156 Torino (IT); LOMAESTRO, Massimo, 10156 Torino (IT)
(74) Representative: Studio Torta S.p.A.

(57) **Abstract**

A system (1) comprising a vehicle (3) and a processing unit (4, 5, 6). The vehicle has a detection unit (7, 9) which detects, during a time of use of the vehicle, a physical quantity associated with the use of the vehicle and stores sensor data (S_{D}) representative of the detected quantity. The processing unit is external to the vehicle and can be coupled to the vehicle. When coupled to the vehicle, the processing unit determines, starting from the sensor data, a health parameter representative of the use of the vehicle (3) during the time of use; compares the health parameter with respective reference data associated with an identification class of the vehicle; and determines a state of health of the vehicle associated with the health parameter, based on the comparison between the health parameter and the respective reference data.

## Description

### CROSS-REFERENCE TO RELATED APPLICATIONS

This patent application claims priority from Italian patent application no. 102022000025704 filed on December 15, 2022, the entire disclosure of which is incorporated herein by reference.

### TECHNICAL FIELD

The invention relates to a system comprising a vehicle and a processing unit and to a method for analysing the state of health of the vehicle.

### KNOWN STATE OF THE ART

Vehicles are known, which comprise a plurality of sensors configured to detect, during the use of the vehicles, one or more quantities associated with the use of the vehicles.

For example, it is known to detect quantities associated with the operation of the vehicle or quantities associated with the vehicle driving style.

It is also known to transmit in real time, by the vehicle, the data acquired by the sensors to a remote processing server, which monitors a state of health of the vehicle.

However, the Applicant observed that the known methods for analysing the state of health of the vehicle are not accurate enough to fulfil the vehicle monitoring needs in specific applications.

Furthermore, the known methods cannot be used to determine the state of health of vehicles that are not provided with means for real-time transmission, that is during the use of the vehicle, of the acquired data to the remote processing server.

Therefore, the need is felt to provide a system and a method for analysing the state of health of a vehicle in an accurate manner and in a way that can be applied to a large range of vehicles.

The object of the invention is to fulfil the needs discussed above.

### SUMMARY OF THE INVENTION

The aforesaid object is reached by a system comprising a vehicle and a processing unit that can be coupled to the vehicle and by a method for analysing the state of health of the vehicle as claimed in the appended claims.

### BRIEF DESCRIPTION OF THE DRAWINGS

For a better understanding of the invention, a preferred embodiment is described hereinafter, by way of non-limiting example and with reference to the accompanying drawings, wherein:
- figure 1 shows a block diagram of the system according to the invention;
- figure 2 shows a flowchart of the method according to the invention; and
- figures 3A-3D show graphic examples of a result of the method according to the invention.

### DETAILED DESCRIPTION OF THE INVENTION

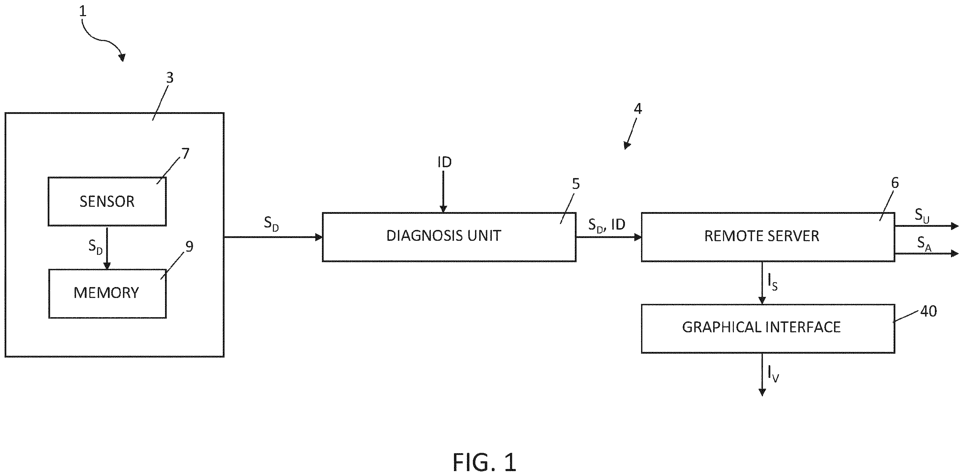

Figure 1 schematically shows a system 1 comprising a vehicle 3 and a processing unit 4, here comprising a diagnosis unit 5 and a remote server 6, external to the vehicle and couplable to the vehicle 3.

The diagnosis unit 5 can be a test or diagnosis unit used by a workshop or by another maintenance centre of the vehicle 3.

The diagnosis unit 5 can be coupled to the vehicle 3 for example by means of a wired electrical connection, for instance through a USB cable, or by means of a wireless proximity connection, for example through Bluetooth technology.

The remote server 6 is coupled to the diagnosis unit 5 for the mutual exchange of data.

The vehicle 3 can be a vehicle with a heat, hybrid or electric engine, in particular a vehicle with wheels, for example a vehicle for transporting goods, such as a truck, or a vehicle for transporting passengers, for example a car or a public means of transportation.

The vehicle 3 comprises a detection unit including a plurality of sensors 7 and a memory 9, for example a nonvolatile memory, which are coupled to one another.

The sensors 7 are configured to detect, during a time of use of the vehicle 3, one or more physical quantities associated with the use of the vehicle 3 and to provide the memory 9 with corresponding sensor data S_{D} representative of the detected physical quantities.

The time of use of the vehicle 3 can correspond, for instance, to the time intervals in which the vehicle 3 is turned on, for example while driving the vehicle 3 and/or during goods loading/unloading operations.

According to an embodiment, the vehicle 3 is not provided with means for transmitting the sensor data S_{D} in real time, during the use of the vehicle 3, to a remote control unit, for example to the remote server 6.

For instance, the vehicle 3 is not provided with means for the connection to a mobile network.

In practice, the vehicle 3 can be configured to transmit the sensor data S_{D} out of the vehicle 3 only when it is coupled to the diagnosis unit 5.

The sensor data S_{D} can comprise data indicative of quantities associated with the operation of an engine of the vehicle 3, such as for example speed of the engine, position of a valve inside the engine, pressure of the engine oil, temperature of the engine oil, temperature of an engine cooling liquid, fuel temperature, etc., during the time of use of the vehicle 3.

In addition or alternatively, the sensor data S_{D} can be indicative of quantities associated with the operation of a catalytic converter of the vehicle 3 or of a Diesel particulate filter (DPF) of the vehicle 3, such as for example efficiency of the catalytic converter, life cycle of the Diesel particulate filter based on the kilometres travelled by the vehicle 3, differential pressure proportional to the exhaust gas flow, temperature, level and pressure of a liquid used in the selective catalytic reduction (SCR), etc., during the time of use.

In addition or alternatively, the sensor data S_{D} can be indicative of quantities associated with the driving style of the vehicle 3, such as for example position of an accelerator pedal, weight and/or load of the vehicle 3, use of the anti-lock braking system, etc., during the time of use.

In addition or alternatively, the sensor data S_{D} can be indicative of physical quantities associated with the operation of a battery of the vehicle 3, such as state of charge, voltage, temperature outside of the vehicle, etc., during the time of use.

For example, the sensor data S_{D} comprise a time sequence of the values acquired by the sensors 7 during the time of use.

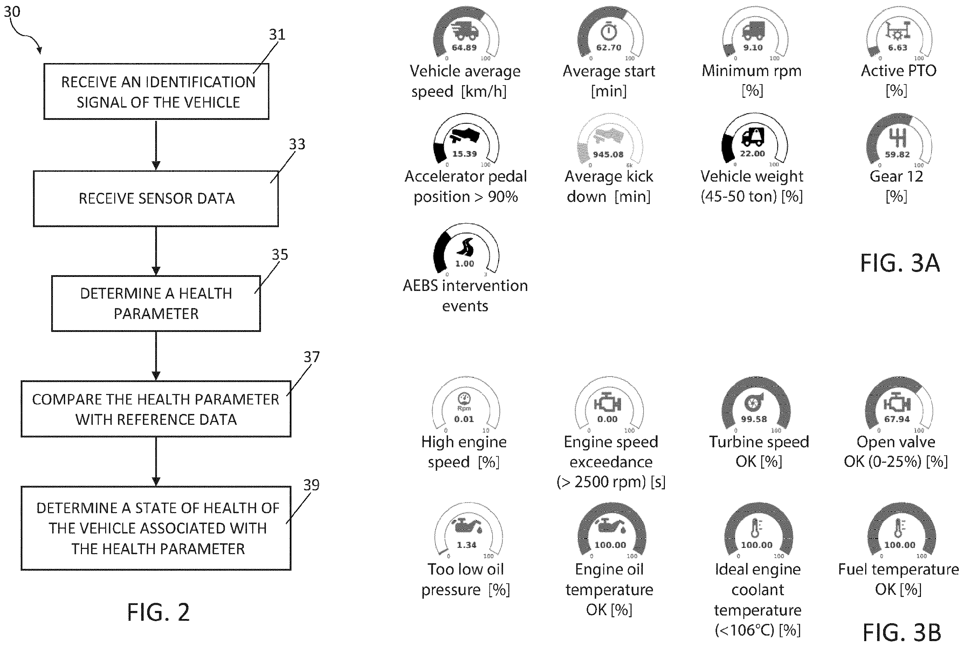

The processing unit 4 is configured to carry out a method, indicated with 30 in figure 2, for analysing the state of health of the vehicle 3, as described below.

The method 30 can start in response to a coupling of the vehicle 3 to the processing unit 4, in particular to the diagnosis unit 5. For example, the diagnosis unit 5 can be coupled to the vehicle 3 during a maintenance or diagnosis phase of the vehicle 3, for example in a specialised workshop during a periodic maintenance or diagnosis intervention.

The diagnosis unit 5, step 31, receives an identification signal ID indicative of an identification class of the vehicle 3. For example, the processing unit 5 can receive the identification signal ID from the vehicle 3 itself, for example if stored in the memory 9, or from an external operator.

The identification class can be indicative of a specific model of the vehicle 3 or of a category of vehicles sharing one or more common features, for example comprising a same component (for instance, same engine, same battery, same mileage, etc.), or belonging to a same vehicle classification standard, in particular to a same polluting emission classification standard (for instance, Euro 6).

The diagnosis unit 5 receives, step 33, the sensor data S_{D} from the vehicle 3.

In this embodiment, the diagnosis unit 5 transmits the identification signal I_{D} and the sensor data S_{D} to the remote server 6 and the remote server 6 determines, step 35, one or more health parameters starting from said sensor data S_{D}.

The health parameters are representative of the use of the vehicle 3 during the time of use, that is of the way in which the vehicle 3 was used during the time of use, for example by a driver or an owner of the vehicle 3.

The health parameters can indicate a percentage of the time of use in which a specific quantity indicated by the sensor data S_{D} was greater than, smaller than or equal to a threshold or they can indicate a number of times a specific quantity exceeded a specific threshold during the time of use.

For example, with reference to the quantities associated with the operation of the engine of the vehicle 3, a health parameter can indicate a percentage of the time of use in which the speed of the engine was high, for example ranging from 1800 rpm to 2500 rpm; a number of occurrences in which the speed of the engine exceeded an alert value, for example 2500 rpm; a number of occurrences in which the temperature of the engine oil was higher than an alert value, for example 125 °C; a percentage of the time of use in which the engine valve was in an open position.

For example, with reference to the quantities associated with the operation of the catalytic converter of the vehicle 3 or of the Diesel particulate filter of the vehicle 3, a health parameter can indicate a percentage of the time of use in which the efficiency of the catalytic converter was within a reference range; a health cycle of the Diesel particulate filter based on the kilometres travelled by the vehicle 3; a percentage of time in which the concentration, pressure or temperature of the liquid used in the selective catalytic reduction was smaller than a threshold.

For example, with reference to the quantities associated with the driving style of the vehicle 3, a health parameter can indicate a percentage of the time of use in which the position of the accelerator pedal was greater than a threshold indicative of an aggressive driving style; a frequency of occurrence of kick-down events; a percentage of the time of use in which the weight or load of the vehicle was greater than a threshold; a percentage of the time of use in which a given gear was engaged in the gearbox; a number of occurrences of intervention of the anti-lock braking system.

For example, with reference to the quantities associated with the operation of the battery of the vehicle 3, a health parameter can indicate a percentage of the time of use in which the state of charge, the state of health, the voltage or a cracking time of the battery exceeded a threshold value.

Subsequently, step 37, the remote server 6 compares each health parameter with respective reference data associated with the identification class of the vehicle.

The reference data can be stored in the remote server 6 or in other databases to which the remote server 6 has access.

According to an embodiment, the reference data associated with a health parameter comprise one or more significant values of the health parameter, which represent a typical use of a vehicle belonging to the identification class of the vehicle 3.

For example, the reference data is obtained starting from sensor data previously acquired by other vehicles belonging to the same identification class as the vehicle 3.

According to an embodiment, the significant value of a health parameter comprises an average value and a standard deviation of the health parameter calculated starting from sensor data of vehicles belonging to the same identification class as the vehicle 3.

In this case, in step 37, the remote server 6 compares the health parameter with said average value and determines a distance of the health parameter from the average value.

For example, the remote server 6 compares said distance with the standard deviation of the reference data.

According to a different embodiment, the reference data of a health parameter can be indicative of a value of safe use of the vehicle 3. For example, a value of temperature outside of the vehicle 3 not complying with the technical specifications of use of the battery of the vehicle 3 or a value of temperature of the engine oil not complying with the technical specifications of use of the engine oil of the vehicle 3.

Subsequently, step 39, the remote server 6 determines, for each health parameter, a corresponding state of health of the vehicle 3.

The remote server 6 provides a health signal I_{S} that associates each health parameter with a respective state of health as a function of the comparison between the health parameter and the respective reference data.

For example, the health signal I_{S} can indicate, for each health parameter, a good state, a warning state or an alert state of the vehicle 3, as a function of the distance of the health parameter from the respective average value.

Again with reference to the embodiment of figure 1, the system 1 further comprises a graphical interface 40, for example a screen, configured to receive the health signal I_{S} and to provide, in response, a visual signal I_{V} as a function of the health signal I_{S}.

For example, the visual signal Iv can comprise a plurality of icons, one for each health parameter, each function of the state of health associated with the respective state of health.

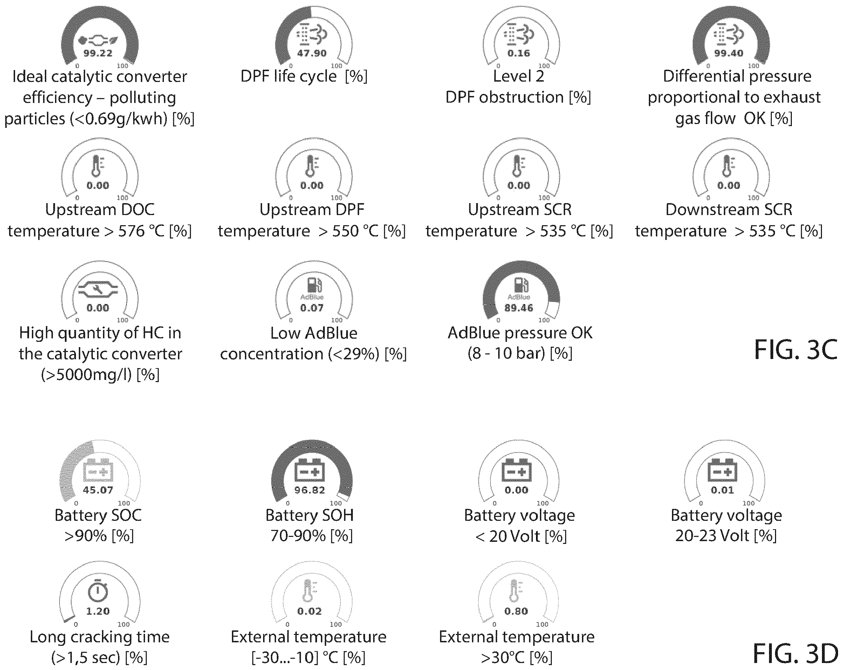

Figures 3A, 3B, 3C, 3D show, by mere way of example, examples of icons shown by the graphical interface 40 for health parameters relating to quantities associated with the driving style of the vehicle 3, with the operation of the engine of the vehicle 3, with the operation of the catalytic converter and/or of the Diesel particulate filter of the vehicle 3 and with the operation of the battery of the vehicle 3, respectively.

The graphical interface 40 can indicate the state of health associated with each health parameter with a different colour, for example green, yellow and red (represented by different shades of grey in figures 3A-3D), depending on whether the state of health is a good state, a warning state or an alert state, respectively.

For instance, by mere way of example, with reference to figure 3A, a good state of health was identified for the health parameter of the average speed of the vehicle 3, for example due to the fact that the vehicle 3, during the time of use, had an average value close to the average value of the average speed of the vehicles belonging to same identification class; a warning state of health was identified for the health parameter of frequency of kick-down events; and an alert state of health was identified for the health parameter of load or weight of the vehicle 3.

Hence, the presence of the graphical interface 40 can simplify the identification of possible faults of the vehicle 3 during a diagnosis or maintenance phase of the vehicle 3.

In addition, the health signal Ss can also indicate an action to be performed on the vehicle 3 as a function of the determined state of health, for example it can comprise a message including a maintenance action to be performed on the vehicle 3 or a suggestion on how to improve the use of the vehicle 3 in order to prevent it from being prematurely damaged.

According to an embodiment, the remote server 6 can further be configured to provide an update signal Su configured to update the reference data of the identification class of the vehicle 3, starting from the sensor data S_{D}.

The update signal S_{U} can be transmitted to a further server where the reference data are stored, or it can be used by the remote server 6 to update the reference data.

For example, in case the reference data comprises the average value of the health parameter, the remote server 6 can be configured to update said average value based on the sensor data S_{D} acquired by the vehicle 3 during the time of use.

This increases the database of sensor data from which the reference data of a specific identification class is obtained; consequently, the accuracy of the method is improved.

In view of the above, the advantages of the system and of the method according to the invention are evident.

The system 1 allows the state of health of the vehicle 3 to be analysed even when the vehicle 3 is not provided with means designed to transmit in real time, during the use of the vehicle 3, the sensor data S_{D} to the remote server 6. In practice, the diagnosis unit 5 serves as connection means between the vehicle 3 and the remote server 6, thus allowing the sensor data S_{D} stored in the vehicle 3 to be transferred out of the vehicle 3, in order to be processed.

Furthermore, the fact that the state of health is determined based on reference data associated with the identification class of the vehicle 3 leads to an accurate analysis of the state of health of the vehicle 3, based on the actual features of the vehicle 3.

In detail, the fact that the health parameters determined starting from the sensor data S_{D} acquired by the vehicle 3 can be compared with reference data correlated with a typical use of the vehicles belonging to the same identification class as the vehicle 3, allows to further improve the analysis accuracy of the present system and relative method.

In fact, the health parameters of the vehicle 3 should have values that are statistically similar to the ones of vehicles belonging to the same identification class, for example values close to the respective average value of the health parameter (for instance, comprised within a range around the average value that is a function of the standard deviation). This allows faults in the operation of the vehicle 3 to be detected beforehand.

For example, if the detection unit 4 established an alert state of health associated with the weight or load of the vehicle 3 during the time of use, this can be indicative of the fact that a specific component, for example the gearbox of the vehicle 3, was subjected to stresses exceeding the desired ones and, hence, can require a maintenance intervention or a replacement.

Furthermore, the alert message corresponding to the alert state can inform a user of the vehicle 3 and suggest a change in the use of the vehicle 3.

For example, if the detection unit 5 determined an alert state of health associated with the level, temperature or pressure of the selective catalytic reduction liquid during the time of use, this can be indicative of the fact that a specific component, for example the catalytic converter of the vehicle 3, can require a maintenance intervention or a replacement.

Finally, it is clear that the system and the method according to the invention can be subjected to changes and variants, which, though, do not go beyond the scope of protection defined by the appended claims.

For example, the significant value of the reference data can be indicative of a statistical metric, different from the average value, suited to represent a typical value of the health parameter for the vehicles of the same identification class as the vehicle 3.

For example, the steps of the method 30 described with reference to the remote server 6 can directly be carried out by the diagnosis unit 5.

## Claims

1. A system (1) comprising a vehicle (3) and a processing unit (4, 5, 6), the vehicle comprising a detection unit (7, 9) configured to detect, during a time of use of the vehicle, at least one physical quantity associated with the use of the vehicle and to store sensor data (S_{D}) representative of the at least one detected quantity,
the processing unit being external to the vehicle, couplable to the vehicle and configured to, when coupled to the vehicle:
- receive (31) an identification signal (ID) indicative of an identification class of the vehicle;
- receive (33) the sensor data (S_{D});
- determine (35), from the sensor data, a health parameter representative of the use of the vehicle (3) during the time of use;
- compare (37) the health parameter with respective reference data associated with the identification class of the vehicle (3); and
- determine (39) a health status of the vehicle associated with the health parameter, based on the comparison between the health parameter and the respective reference data.

2. The system according to claim 1, wherein the reference data comprise a significant value of the health parameter that is representative of a typical use of a vehicle belonging to the identification class.

3. The system according to the preceding claim, wherein the significant value is an average value of the health parameter associated with a vehicle belonging to the identification class, wherein the processing unit is configured to compare the health parameter with the respective average value and determine a distance between the health parameter and the average value, the health status of the vehicle associated with the health parameter being a function of said distance.

4. The system according to any of the preceding claims, wherein the reference data comprise one or more values of the health parameter that are representative of a safe use of a vehicle belonging to the identification class.

5. The system according to any of the preceding claims, wherein the sensor data (SD) comprise quantities associated with the functioning of an engine of the vehicle, quantities associated with the functioning of a catalyst or a diesel particulate filter of the vehicle, quantities associated with the driving style of the vehicle and/or quantities associated with the functioning of a battery of the vehicle.

6. The system according to any of the preceding claims, wherein the health parameter indicates a percentage share of the time of use in which one of the quantities indicated by the sensor data was greater than, less than, or equal to a threshold, or is indicative of a number of times in which one of the quantities indicated by the sensor data was greater than, less than, or equal to a threshold value.

7. The system according to any of the preceding claims, wherein the processing unit is further configured to update the reference data based on the sensor data.

8. The system according to any of the preceding claims, further comprising a graphical interface (40) coupled to the processing unit and configured to provide a visual signal as a function of the health status determined by the processing unit.

9. The system according to any of the preceding claims, wherein the processing unit is configured to provide a signal indicative of an action to be performed on the vehicle (3), as a function of the health status of the vehicle.

10. The system according to any one of the preceding claims, wherein the processing unit comprises a diagnostic unit (5) couplable to the vehicle via a wired connection or a wireless proximity connection, the vehicle being configured to provide the sensor data (S_{D}) to the processing unit only in response to the coupling of the vehicle with the diagnostic unit.

11. A method (30) for analysing a state of health of a vehicle (3) comprising a detection unit (7, 9) configured to detect, during a time of use of the vehicle, at least one physical quantity associated with the use of the vehicle and to store sensor data (S_{D}) representative of the at least one detected quantity,
the method being performed by a processing unit (4, 5, 6) external to the vehicle and couplable to the vehicle, the method comprising:
- receiving (31) an identification signal (ID) indicative of an identification class of the vehicle;
- receiving (33) the sensor data (S_{D});
- determining (35), from the sensor data, a health parameter representative of the use of the vehicle (3) during the time of use;
- comparing (37) the health parameter with respective reference data associated with the identification class of the vehicle (3); and
- determining (39) a health status of the vehicle associated with the health parameter, based on the comparison between the health parameter and the respective reference data.

12. A processing unit (4, 5, 6) configured to perform the method of the preceding claim.

13. A computer program comprising instructions that, when executed by a processing unit coupled to a vehicle, cause the processing unit to perform the method of claim 11.
